# EUROPEAN PATENT APPLICATION

(11) **EP 2 559 776 A1**
(43) Date of publication of application: **20.02.2013**
(21) Application number: 11768916.6
(22) Date of filing: 14.04.2011
(51) Int. Cl.: C22B 23/00, C22B 3/04, C22B 3/44

(54) **PLANT FOR WET SMELTING OF LATERITE NICKEL ORE AND METHOD OF OPERATING SAME**

(30) Priority: 15.04.2010 JP 2010094330
(71) Applicant: Sumitomo Metal Mining Co., Ltd., Tokyo 105-8716 (JP)
(72) Inventor: MITSUI, Hiroyuki, Tokyo 105-8716 (JP); NAKAI, Osamu, Tokyo 105-8716 (JP); KITAZAKI, Tooru, Tokyo 105-8716 (JP); ASATORI, Moritarou, Tokyo 105-8716 (JP)
(74) Representative: Perrey, Ralf
(86) International application number: PCT/JP2011/059266
(87) International publication number: WO 2011/129395

(57) **Abstract**

A wet smelting plant for nickel oxide ore is provided in which, even when a serious trouble occurs in a processing facility, the preparation period of time of the processing facility required for discontinuing and restarting the operation can be minimized. The wet smelting plant for nickel oxide ore (20) comprises two or more series of the processing facilities, each processing facility including a step operating facility, a utility feed facility (8a), (8b), a hydrogen sulfide feed facility (10a), (10b), a flocculant feed facility (14a), (14b), and a neutralizer feed facility (12a), (12b) and is featured in that connecting installations are further provided for connecting between the utility feed facilities (8a) and (8b), between the hydrogen sulfide feed facilities (10a) and (10b), between the flocculant feed facilities (14a) and (14b), and between the neutralizer feed facilities (12a) and (12b) in order to make the delivery of utility supplies, hydrogen sulfide, flocculant, and neutralizer for mutual substitution.

## Description

### Field of the Invention

The present invention relates to a wet smelting plant for nickel oxide ore and a method of operating the same. More specifically, the present invention relates to a wet smelting plant for nickel oxide ore which has multiple series of processing facilities and to a method of operating the same wherein, even when a trouble serious enough to interrupt the operation at a part of the processing facilities (referred to simply as a serious trouble hereinafter) occurs, a reduction in the quantity of processing caused by the serious trouble can be minimized.
The present application asserts priority rights based on JP Patent Application 2010-094330 filed on April 15, 2010. The total contents of disclosure of the Patent Application of the senior filing date are to be incorporated by reference into the present Application.

### Background of the Invention

High-pressure acid leaching process with the use of sulfuric acid has been focused as a wet smelting method for nickel oxide ore. The process comprises a succession of wet smelting steps without any dry processing step such as a drying step or a roasting step and will thus be advantageous for energy and cost saving and simultaneously for producing a nickel/cobalt mixture sulfide of which the content of nickel is increased to substantially 50 to 60 % by weight.

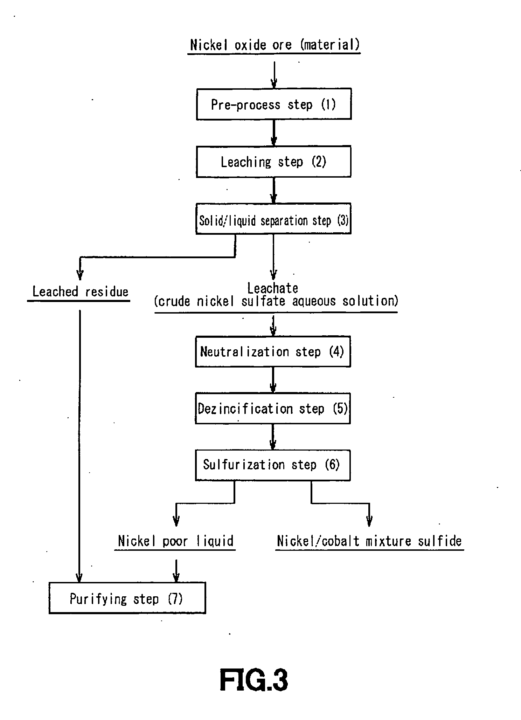

The high pressure acid leaching process for producing such a nickel/cobalt mixture sulfide includes, for example as shown in Fig. 3, a pre-process step (1), a leaching step (2), a solid/liquid separation step (3), a neutralization step (4), a dezincification step (5), a sulfurization step (6), and a purifying step (7).

In the pre-process step (1) shown in Fig. 3, nickel oxide ore is crushed and screened to have a slurry. In the leaching step (2), the slurry produced at the pre-process step (1) is added with sulfuric acid and agitated at 220 to 280°C for high-temperature high-pressure acid leaching thus to produce a leached slurry. In the solid/liquid separation step (3), the leached slurry produced at the leaching step (2) is subjected to solid/liquid separation to produce a leachate containing nickel and cobalt (referred to as crude nickel sulfate aqueous solution hereinafter) and a leached residue. In the neutralization step (4), the crude nickel sulfate aqueous solution produced at the solid/liquid separation step (3) is neutralized. In the dezincification step (5), the crude nickel sulfate aqueous solution neutralized at the neutralization step (4) is added with a hydrogen sulfide gas to produce a precipitate from which a zinc material is removed in the form of zinc sulfide. In the sulfurization step (6), the dezincificated solution produced at the dezincification step (5) is added with a hydrogen sulfide gas to produce a nickel/cobalt mixture sulfide and a poor nickel liquid. In the purifying step (7), the leached residue produced at the solid/liquid separation step (3) and the poor nickel liquid produced at the sulfurization step (6) are purified (See Patent Literature 1 for example).

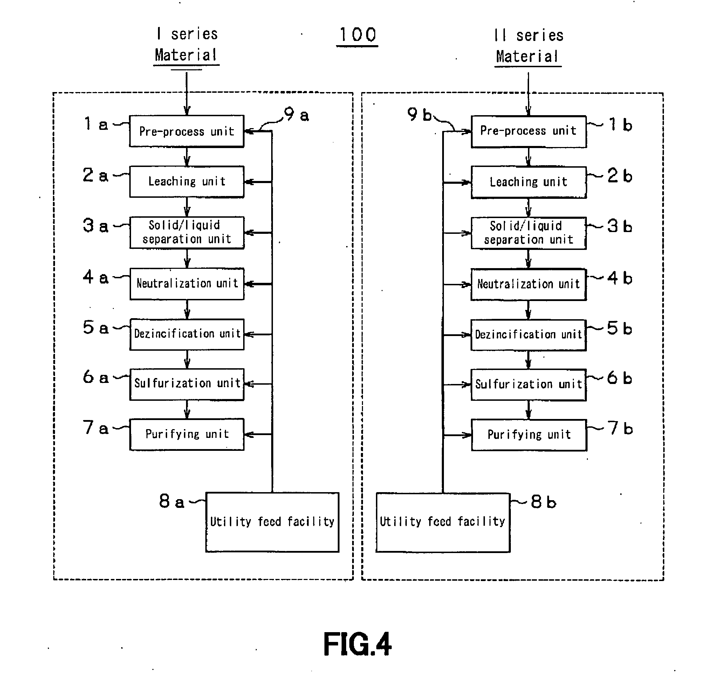

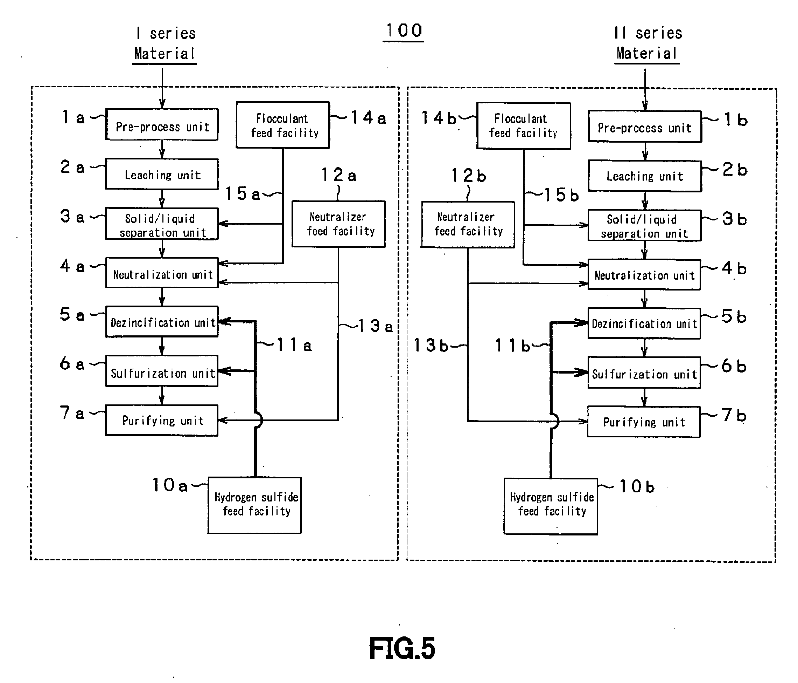

As shown in Figs. 4 and 5, a wet smelting plant 100 for nickel oxide ore (referred to simply as a wet smelting plant hereinafter) includes, for example, two series of processing facilities, more particularly I-series processing facility and II-series processing facility. The two series processing facilities are composed of step operating facilities including pre-process units (1a, 1b) for conducting the pre-process step (1), leaching units (2a, 2b) for conducting the leaching step (2), solid/liquid separation units (3a, 3b) for conducting the solid/liquid separation step (3), neutralization units (4a, 4b) for conducting the neutralization step (4), dezincification units (5a, 5b) for conducting the dezincification step (5), sulfurization units (6a, 6b) for conducting the sulfurization step (6), and purifying units (7a, 7b) for conducting the purifying step (7).

The two series processing facilities also include, in addition to the above step operating facilities, utility feed facilities 8a, 8b which comprise boilers, water systems, and power systems as shown in Fig. 4. Furthermore, the two series processing facilities include, as shown in Fig. 5, hydrogen sulfide feed facilities 10a, 10b, neutralizer feed facilities 12a, 12b, flocculant feed facilities 14a, 14b, and piping systems such as liquid feed pipes which connect the step operating facilities one after another for conducting the prescribed steps. It is noted that the utility feed facilities 8a, 8b, the hydrogen sulfide feed facilities 10a, 10b, the neutralizer feed facilities 12a, 12b, and the flocculant feed facilities 14a, 14b are referred to simply as feed facilities hereinafter.

As shown in Figs. 4 and 5, the step operating facilities in the I series are supplied with steam, water, and electric power from the utility feed facility 8a while the step operating facilities of the II series are supplied with steam, water, and electric power from the utility feed facility 8b. Amounts of hydrogen sulfide are fed from the hydrogen sulfide feed facilities 10a, 10b to the dezincification units 5a, 5b and the sulfurization units 6a, 6b. Amounts of a neutralizer are fed from the neutralizer feed facilities 12a, 12b to the neutralization units 4a, 4b and the purifying units 7a, 7b. Amounts of a flocculant are fed from the flocculant feed facilities 14a, 14b to the solid/liquid separation units 3a, 3b and the neutralization units 4a, 4b. The piping systems include hydrogen sulfide feed conduits 11a, 11b, neutralizer feed conduits 13a, 13b, and flocculant feed conduits 15a, 15.

In the operation of the wet smelting plant 100, major intermediate products are provided in the form of liquid or slurry. Accordingly when, during the operation of the wet smelting plant 100, any of steam, water, electric power, the hydrogen sulfide, the flocculant, and the neutralizer fails to be supplied due to the occurrence of a serious trouble at, for example, the boiler, the entire operation of the wet smelting plant 100 will discontinue. It is common to restart the entire operation of the wet smelting plant 100 only after the serious trouble is eliminated or amended. It is hence required for operating the wet smelting plant 100 at a continuous mode and at a high operational efficiency to run the utility feed facilities 8a, 8b, the hydrogen sulfide feed facilities 10a, 10b, and the chemical feed facilities (neutralizer feed facilities 12a, 12b and flocculant feed facilities 14a, 14b) constantly with trouble-free conditions.

For meeting the requirement, the wet smelting plant 100 is designed to prevent the load, which is received at a given level by each of the step operating facilities and other relevant facilities during the operation, from varying significantly. Also, the wet smelting plant 100 is adapted to avoid the sudden occurrence of any serious trouble through increasing the frequency of the periodical operation shutdown (or inspection) or extending the duration of the operation shutdown for conducting inspection services and, if desired, repairing the facilities.

Moreover the wet smelting plant 100 is inevitable to be free from the occurrence of an unexpected trouble in any of the steps (in the process) and needed to temporally lower (i.e. ramp down) the load just after the troubled step. For the compensation, the wet smelting plant 100 is provided normally with an emergency storage vessel so as not to decline the quantity of processing after the ramping down.

As the emergency storage vessel is provided, it can receive an excessive amount of the process fluid while the load at the steps prior to the troubled step remains unchanged or lowered. When the trouble has been eliminated, the load at the step is raised (i.e. ramped up) and repeatedly carry out the processing of the process fluid stored in the emergency storage vessel under the normal load. This will enable to achieve the target quantity of the processing throughout a quarter period or an annual period.

Such a nearly emergent treatment action may be effected only when the duration of time required for restarting the wet smelting plant 100 is generally not longer than, for example, eight hours although depending on the size of the emergency storage vessel. However, if the duration of time required for restarting the wet smelting plant 100 is longer than eight hours, the process fluid stored in the emergency storage vessel reaches its maximum amount, thus resulting in canceling the entire operation.

One of the serious troubles which may probably occur in the pre-process units 1a, 1b in the wet smelting plant 100 shown in Figs. 4 and 5 is known as follows. In brief, nickel oxide ore, after excavated, crushed and screened in a drum washer which comprises a drum and a trommel joined to each other may take a short pass in the trommel and then simply be moved out hence resulting in poor achievement of the processing action.

A technique for solving the prescribed problem has been introduced where an array of projections which locate along the circumference of a plane extending perpendicular to the axis of rotation of the trommel and have substantially a rectangular shape in the cross section at the circumference are formed at intervals of substantially four times the screen opening size of the trommel on the inner side of the trommel in the drum washer (See Patent Literature 2).

Another serious trouble which may occur in the sulfurization units 6a, 6b shown in Figs. 4 and 5 is that a nickel/cobalt mixture sulfide produced in the sulfurization units 6a, 6b grows while being adhered as scales to the inner surface of a reactor container and will thus interrupt the action of the facilities or break down the facilities.

For solving the another serious trouble, a technique has been introduced where a nickel sulfide of which the content of nickel is 4 to 6 times that of a dezincificated fluid produced in the dezincification units 5a, 5b is used as a seed crystal in cycles in the sulfurization units 6a, 6b thus to prevent the growth of the scales (See Patent Literature 3).

As described above, the wet smelting plant 100 permits a lot of troubles including the above described or reference troubles to occur frequently because of the use of hard ore particles in the form of slurry and the fact inherent to the processing action that nickel/cobalt mixture sulfide is produced and easily adhered to the inner surface of the reactor container. Consequently, the operational efficiency of the wet smelting plant 100 remains not high in common practice.

Particularly, it is generally known that, in case of the occurrence of a serious trouble in any of the prescribed feed facilities, the entire operation of the wet smelting plant 100 is ceased only when the temperature and the pressure in the leaching units 2a, 2b shown in Figs. 4 and 5 have been lowered to their normal levels. Also, even after the serious trouble is eliminated in the leaching units 2a, 2b, the entire operation of the wet smelting plant 100 can be restarted only with the temperature and the pressure having been raised back to their desired levels.

It is common in the leaching units 2a, 2b that the requirement of time which is a sum of the duration of time required for lowering the temperature and the pressure to their normal levels and the duration of time required for raising back to their desired levels is as long as one day or two days (referred to as a preparation period hereinafter). More specifically, the leaching units 2a, 2b require a considerable length of the preparation period for discontinuing and restarting their action before restarting the entire action of the processing facilities. At the leaching units 2a, 2b, when the preparation period is called once a month, the operational efficiency will be declined by about 5 % at a simple simulation provided that the working days are 30 days per month, as compared with the trouble-free continuous operation. Such a declination in the operational efficiency is a significant drawback in the actual operation.

A demand for increasing the production of nickel/cobalt mixture sulfide through raising the quantity of processing the nickel oxide ore has been known. For satisfying the demand, multiple series of the step operating facilities described above for carrying out the steps are introduced.

However, even with the use of the multiple series of the step operating facilities described above, a serious trouble may occur at similar frequency along each series. Hence, when two series, for example, of the step operating facilities are employed as described above, the occurrence of a serious trouble may not be offset by the merit of the two series of the step operating facilities but result in the operational capability lowering down to less than that of a single series of the step operating facilities.

### Literature of the Prior Art

### Patent Literature

Patent Literature: JP-A-2005-350766
Patent Literature: JP-A-2009-173967
Patent Literature: JP-A-2008-231470

### Disclosure of the Invention

### Problems to be solved by the Invention

The present invention is proposed in view of the above described problems of the prior art and its object is to provide a wet smelting plant for nickel oxide ore and a method of operating the same in which the wet smelting plant comprises two or more series of processing facilities and, when at least one of the feed facilities in each series including a utility feed facility, a hydrogen sulfide feed facility, a neutralizer feed facility, and a flocculant feed facility has a serious trouble, the reduction in the quantity of processing can be minimized.

### Means to solve the Problem

We, the inventors, have studied through a variety of experiments for solving the problems of the prior art and found out that the prescribed problems can be solved by connecting between the utility feed facilities, between the hydrogen sulfide feed facilities, and between the chemical feed facilities in the different series as invented the present invention.

More specifically, a wet smelting plant for nickel oxide ore according to the present invention is featured comprising two or more series of processing facilities, wherein each processing facility including: a step operating facility having a pre-process unit, a leaching unit, a solid/liquid separation unit, a neutralization unit, a dezincification unit, a sulfurization unit and a purifying unit; a utility feed facility for feeding the pre-process unit, the leaching unit, the solid/liquid separation unit, the neutralization unit, the dezincification unit, the sulfurization unit and the purifying unit with the utility supplies including steam, water and electric power; a hydrogen sulfide feed facility for feeding the dezincification unit and the sulfurization unit with hydrogen sulfide; a flocculant feed facility for feeding the solid/liquid separation unit and the neutralization unit with a flocculant; and a neutralizer feed facility for feeding the neutralization unit and the purifying unit with a neutralizer; and connecting installations for providing connections between the utility feed facilities, between the hydrogen sulfide feed facilities, between the flocculant feed facilities and between the neutralizer feed facilities in order to make the delivery of the utility supplies, the hydrogen sulfide, the flocculant and the neutralizer for mutual substitution.

It is also characterized in that the connecting installations are arranged for connecting between the feed facilities at the uppermost of supply paths along which the utility supplies, the hydrogen sulfide, the flocculant, and the neutralizer are fed from the feed facilities. It is further characterized in that the processing facilities of the two or more series are equal in the processing capability. It is still further characterized in that the number of the two or more series is two. It is still further characterized in that the connecting installation includes an opening and closing mechanism.

A method of operating a wet smelting plant for nickel oxide ore according to the present invention is characterized in that the wet smelting plant for nickel oxide ore described is employed.

The method of operating a wet smelting plant for nickel oxide according to the present invention is also characterized in that, in case that the action of at least one of the feed facilities in one series composed of the utility feed facility, the hydrogen sulfide feed facility, the flocculant feed facility, and the neutralizer feed facility is discontinued, the feed facilities in the other series are operated at a level higher than the normal operational efficiency while the processing facility of the one series is declined in the operational efficiency.

### Advantage of the Invention

Since the wet smelting plant for nickel oxide ore according to the present invention allows the feed facilities to be connected to each other by the connecting installation, the down time of the processing facilities can be minimized even when a serious trouble occurs in at least the feed facility in the processing facility of any series, thus minimizing the reduction in the quantity of processing. Accordingly, in the present invention, unless serious troubles occur at one time in the like feed facilities of the different series processing facilities, the action of the leaching units remains not interrupted and the operation of the wet smelting plant can be continued, thereby ensuring a minimum of reduction in the quantity of processing at the leaching step.

### Brief Description of the Drawings

Fig. is a schematic view schematically showing a wet smelting plant of the present invention;
Fig. 2 is a schematic view schematically showing the wet smelting plant of the present invention;
Fig. 3 is a flow chart showing outline steps of a high pressure acid leach process;
Fig. 4 is a schematic view schematically showing a conventional wet smelting plant; and
Fig. 5 is a schematic view schematically showing the conventional wet smelting plant.

### Best Modes for embodying the Invention

One embodiment of the wet smelting plant according to the present invention will be described referring in the following order to the relevant drawings.
1. Wet smelting Plant
1-1. Step Operating Facility
1-2. Feed Facilities
2. Method of operating (running) the wet smelting plant when a serious trouble occurs
3. Other Embodiments
4. Examples

### <1. Wet smelting Plant>

The wet smelting plant according to the present invention comprises two or more series of processing facilities for carrying out a pre-process step, a leaching step, a solid/liquid separation step, a neutralization step, a dezincification step, a sulfurization step, and a purifying step. Since the wet smelting plant is composed of two or more series of the processing facilities, the quantity of processing a raw material or nickel oxide ore can be increased thus to raise the production of nickel/cobalt mixture sulfide.

The wet smelting plant having two series of the processing facilities will be described in the form of an example.

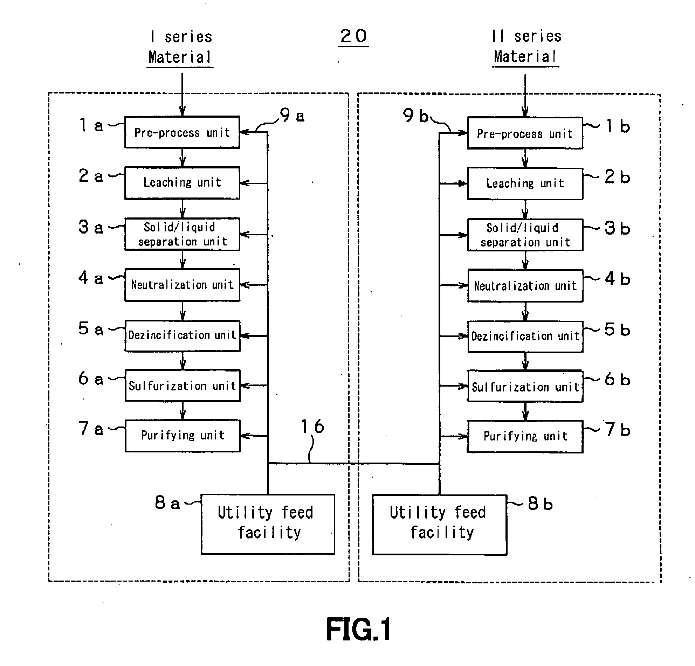

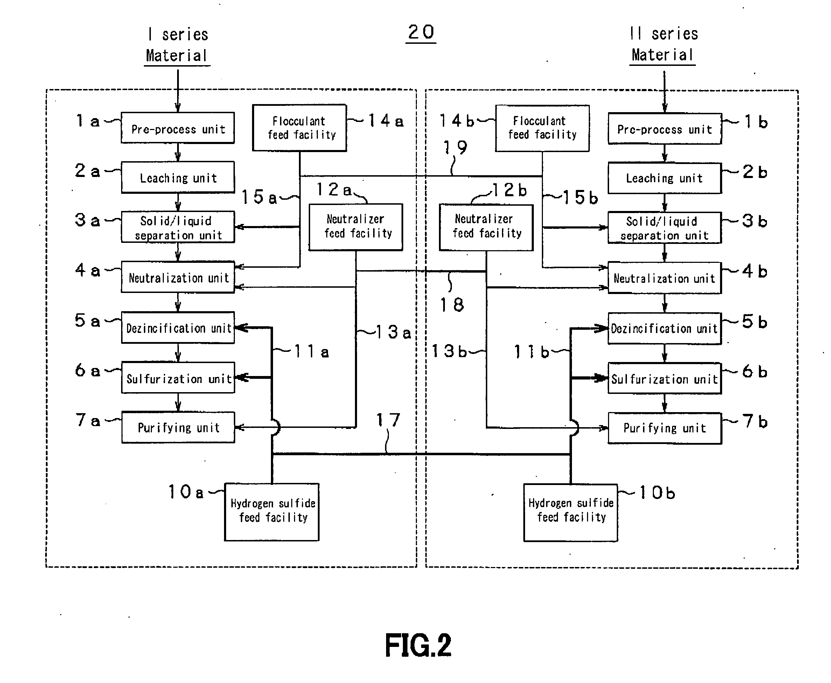

As shown in Figs. 1 and 2, the wet smelting plant 20 according to the present invention comprises two series, I series and II series, of the processing facilities. The processing facilities include pre-process units (1a, 1b), leaching units (2a, 2b), solid/liquid separation units (3a, 3b), neutralization units (4a, 4b), dezincification units (5a, 5b), sulfurization units (6a, 6b), and purifying units (7a, 7b) for carrying out the steps. It is noted that the units in each of the processing facilities are denoted simply as the pre-process unit 1, the leaching unit 2, the solid/liquid separation unit 3, the neutralization unit 4, the dezincification unit 5, the sulfurization unit 6, and the purifying unit 7 unless otherwise explained separately in each of the processing facilities in more detail.

### <1-1. Step Operating Facilities>

The pre-process unit 1 is composed of a pre-process system such as a crusher, for example, for carrying out the pre-process step where the raw material or nickel oxide ore is crushed and screened to have a slurry. The nickel oxide ore may be, for example, a so-called laterite material such as limonite or saprolite.

The leaching unit 2 conducts the leaching step where the slurry produced at the pre-process unit 1 is added with sulfuric acid, agitated at 220 to 280°C, and subjected to acid leaching under a high temperature and a high pressure thus to produce a leached slurry. The leaching unit 2 may be implemented by, for example, a high temperature pressurizing container (i.e. an autoclave). More specifically, the action of the leaching unit 2 involves leaching of, for example, a sulfate of nickel and cobalt through the leaching reaction and the hydrolysis reaction under a high temperature and a high pressure, represented by the following expressions (1) to (5), and immobilizing the leachate as a hematite of iron sulfate. However, since the immobilization of iron ions is not completely achieved, a liquid component of the leached slurry generally contains divalent and trivalent iron ions in addition to nickel and cobalt.

### (Leaching Reaction)

MO+H₂SO₄ → MSO₄+H₂O (1)

(where M is selected from, for example, Ni, Co, Fe, Zn, Cu. Mg, Cr, and Mn.)

2Fe(OH)₃→3H₂SO₄ → Fe₂(SO₄)₃+6H₂O (2)

FeO+H₂SO₄ → FeSO₄+H₂O (3)

### (Hydrolysis Reaction under high temperature)

2FeSO₄+H₂SO₄+(1/2)O₂ → Fe₂(SO₄)₃+H₂O (4)

Fe₂ (SO₄)₃+3H₂O → Fe₂O3+3H₂SO₄ (5)

The solid/liquid separation unit 3 conducts the solid/liquid separation step where the leached slurry produced at the leaching unit 2 is subjected to solid/liquid separation for producing a leachate liquid (a crude nickel sulfate aqueous solution) which contains nickel and cobalt and a leaching residue. The solid/liquid separation step is advantageous of separating a nickel debris, which is adhered to the leaching residue and removed out, from the leached slurry produced at the leaching unit 2 and recovering the same in the crude nickel sulfate aqueous solution. For example, in the solid/liquid separation unit 3, the leached slurry is mixed with a rinsing liquid and subjected to the solid/liquid separation in a thickener, which is an implementation of the solid/liquid separation unit, using a flocculant supplied from the flocculant feed facilities 14a, 14b which will be described later. This action dilutes the leached slurry with the rinsing liquid so that the leaching residue is condensed and recovered as a precipitate in the thickener, whereby the remaining of nickel adhered to the leaching residue can be decreased depending on the degree of dilution. The flocculant may be, for example, an anion flocculating agent.

The neutralization unit 4 is composed of, for example, a neutralizing system such as a neutralizing container for conducting the neutralization step where the crude nickel sulfate aqueous solution produced at the solid/liquid separation unit 3 is neutralized. More specifically in the neutralization unit 4, the crude nickel sulfate aqueous solution while being prevented from oxidation is added with the flocculant supplied from the flocculant feed facilities 14a, 14b and a neutralizing agent supplied form the neutralizer feed facilities 12a, 12b, which will be described later, for producing a neutralized precipitate slurry containing trivalent iron and a mother liquid for recovery of nickel. As the result, the neutralization unit 4 enables the neutralization of excessive acid and simultaneously the removal of trivalent iron ions from the solution. The neutralizer may be, for example, a calcium carbonate. It is also desired in the neutralization unit 4 that the pH in the neutralization step ranges from 3.2 to 3.8. This pH range can prevent the generation of a hydride of nickel from being excessive. It is preferable in the neutralization unit 4 that the temperature in the neutralization step is 50 to 80°C. If the temperature is lower than 50°C, the precipitate becomes too fine and give a hostile effect to the solid/liquid separation step. If the temperature exceeds 80°C, the resistance to corrosion of the materials of the corresponding units will decrease and the cost of energy for heating up will increase.

The dezincification unit 5 conducts the dezincification step where the crude nickel sulfate aqueous solution neutralized at the neutralization unit 4 is added with a hydrogen sulfide gas supplied from the hydrogen sulfide feed facilities 10a, 10b for removing a precipitate of zinc in the form of zinc sulfide and producing a dezincificated solution.

The sulfurization unit 6 conducts the sulfurization step where the dezincificated solution produced at the dezincification unit 5 is added with a hydrogen sulfide gas supplied from the hydrogen sulfide feed facilities 10a, 10b for producing a nickel/cobalt mixture sulfide and a nickel poor liquid. The nickel poor liquid contains very small amounts of nickel and cobalt existed as a recovery loss in addition to impurities including iron, magnesium, manganese, and other elements which are not sulfided.

The purifying unit 7 conducts the purifying step where the leaching residue produced at the solid/liquid separation unit 3 and the nickel poor liquid produced at the sulfurization unit 6 are purified with the neutralizer supplied from the neutralizer feed facilities 12a, 12b. In the wet smelting plant 20 equipped with the step operating facilities described above, the recovery of nickel can thus be accomplished at a higher rate.

### <1-2. Feed Facilities>

The wet smelting plant 20 includes, as shown in Figs. 1 and 2, the utility feed facilities 8a, 8b, the hydrogen sulfide feed facilities 10a, 10b, the neutralizer feed facilities 12a, 12b, and the flocculant feed facilities 14a, 14b. Those feed facilities are denoted simply as the utility feed facility 8, the hydrogen sulfate feed facility 10, the neutralizer feed facility 12, and the flocculant feed facility 14 unless otherwise explained separately in each of the processing facilities in more detail.

The utility feed facility 8 comprises, for example, a boiler, a water system, and a power system. The boiler is provided for producing a supply of steam to control the reaction temperature in each step operating facility. The supply of steam produced by the boiler is fed to the step operating facilities as needed. The water system is a system for producing a supply of water used in each step operating facility. The supply of water produced by the water system is fed to the step operating facilities as needed. The power system is a system for producing a supply of electric power used in each step operating facility. The supply of electric power produced by the power system is fed to the step operating facilities as needed.

The utility feed facility 8a is connected by utility feed conduits 9a to the step operating facilities of the I series. Equally, the utility feed facility 8b is connected by utility feed conduits 9b to the step operating facilities of the II series. Moreover, the utility feed conduit 9a and the utility feed conduit 9b are connected to each other by a utility connecting installation 16.

The utility connecting installation 16 may be equal in the construction to the utility feed conduits 9a, 9b. The utility connecting installation 16 connects the utility feed conduit 9a and the utility feed conduit 9b to each other at the uppermost of a supply path for feeding the utility supplies (of steam, water, and electric power). More particularly, the utility connecting installation 16 extends, for example, from a point close to the joint between the utility feed conduit 9a and the utility feed facility 8a to a point close to the joint between the utility feed conduit 9b and the utility feed facility 8b. As described, the utility connecting installation 16 allows the utility supplies to be fed between the utility feed facilities of different series for mutual substitution, whereby the step operating facilities of each series can efficiently receive the utility supply from, for example, the utility feed facility 8b when the utility feed facility 8a has a serious trouble.

The hydrogen sulfide feed facility 10 is provided for producing a hydrogen sulfide gas and supplying both the dezincification unit 5 and the sulfurization unit 6 with desired amounts of the hydrogen sulfide gas as required. The hydrogen sulfide feed facility 10a is connected by a hydrogen sulfide feed conduit 11 a to the dezincification unit 5a and the sulfurization unit 6a. Equally, the hydrogen sulfide feed facility 10b is connected by a hydrogen sulfide feed conduit 11b to the dezincification unit 5b and the sulfurization unit 6b. Furthermore, the hydrogen sulfide feed conduit 11a and the hydrogen sulfide feed conduit 11b are connected to each other by a hydrogen sulfide connecting installation 17.

The hydrogen sulfide connecting installation 17 is constructed in the same manner as of, for example, the hydrogen sulfide feed conduit 11. Also, the hydrogen sulfide connecting installation 17 is connected between the hydrogen sulfide feed conduit 11 a and the hydrogen sulfide feed conduit 11b to each other at the uppermost of a supply path for feeding the hydrogen sulfide, hence allowing the hydrogen sulfide to be used between the step operating facilities of different series for mutual substitution. More particularly, the hydrogen sulfide connecting installation 17 extends, for example, from a point close to the joint between the hydrogen sulfide feed facility 10a and the hydrogen sulfide feed conduit 11 a to a point close to the joint between the hydrogen sulfide feed facility 10b and the hydrogen sulfide feed conduit 11b. Accordingly, even when the hydrogen sulfide feed facility 10a (10b), for example, has a serious trouble, the step operating facilities of each series can efficiently receive the hydrogen sulfide from the other hydrogen sulfide feed facility 10b (10a) via the hydrogen sulfide connecting installation 17.

The neutralizer feed facility 12 supplies both the neutralization unit 4 and the purifying unit with the above described neutralizer as desired. The neutralizer feed facility 12a is connected to the neutralization unit 4a and the purifying unit 7a by a neutralizer feed conduit 13a. Equally, the neutralizer feed facility 12b is connected to the neutralization unit 4b and the purifying unit 7b by a neutralizer feed conduit 13b. Moreover, the neutralizer feed conduit 13a and the neutralizer feed conduit 13b are connected to each other by a neutralizer connecting installation 18.

The neutralizer connecting installation 18 is constructed in the same manner as of, for example, the neutralizer feed conduit 13. The neutralizer connecting installation 18 is connected between the neutralizer feed conduit 13a and the neutralizer feed conduit 13b to each other at the uppermost of a supply path for feeding the neutralizer, hence allowing the neutralizer to be used between the step operating facilities of different series for mutual substitution. More particularly, the neutralizer connecting installation 18 extends, for example, from a point close to the joint between the neutralizer feed facility 12a and the neutralizer feed conduit 13a to a point close to the joint between the neutralizer feed facility 12b and the neutralizer feed conduit 13b. Accordingly, even when the neutralizer feed facility 12a, for example, has a serious trouble, the step operating facilities of each series can efficiently receive the neutralizer from the other neutralizer feed facility 12b via the neutralizer connecting installation 18.

The flocculant feed facility 14 supplies both the solid/liquid separation unit 3 and the neutralization unit 4 with the above described flocculant as desired. The flocculant feed facility 14a is connected by a flocculant feed conduit 15a to the solid/liquid separation unit 3a and the neutralization unit 4a. Equally, the flocculant feed facility 14b is connected by a flocculant feed conduit 15b to the solid/liquid separation unit 3b and the neutralization unit 4b. Moreover, the flocculant feed conduit 15a and the flocculant feed conduit 15b are connected to each other by a flocculant connecting installation 19.

The flocculant connecting installation 19 is constructed in the same manner as of, for example, the flocculant feed conduit 15. The flocculant connecting installation 19 is connected between the flocculant feed conduit 15a and the flocculant feed conduit 15b to each other at the uppermost of a supply path for feeding the flocculant, hence allowing the flocculant to be used between the step operating facilities of different series for mutual substitution. More particularly, the flocculant connecting installation 19 extends, for example, from a point close to the joint between the flocculant feed facility 14a and the flocculant feed conduit 15a to a point close to the joint between the flocculant feed facility 14b and the flocculant feed conduit 15b. Accordingly, even when the flocculant feed facility 14a, for example, has a serious trouble, the step operating facilities of each series can efficiently receive the flocculant from the other flocculant feed facility 14b via the flocculant connecting installation 19.

It is also desired that the above described connecting installation includes an opening and closing mechanism (a shutdown mechanism) for controlling and canceling the delivery of the utility supply. For instance, the utility connecting installation 16 may be equipped preferably with a control valve for controlling the supply of steam or water and a switch for controlling the supply of electric power. The hydrogen sulfide connecting installation 17, the neutralizer connecting installation 18, and the flocculant connecting installation 19 may be equipped preferably with control valves.

If desired, the connection of each connecting installation is cut off by the action of the opening and closing mechanism so that the wet smelting plant 20 having two different series of the processing facilities can be operated separately as a single plant composed of one series of the processing facility.

In this way, the wet smelting plant 20 of which the connecting installations are quipped with opening and closing mechanisms can favorably manage any operational variation such as when different materials which are not equal in the composition have to be processed one after another or when a material of which the composition remains unchanged has to be processed with different processing requirements. Also since the delivery of supplies is favorably controlled by the opening and closing mechanism in the wet smelting plant 20, the reduction in the quantity of processing caused by the occurrence of a serious trouble can be minimized while the operation is continued and also the restart of the operation after the elimination of the serious trouble will be achieved quickly.

It is further desired that multiple series of the processing facilities in the wet smelting plant 20 are installed at substantially equal locations. This will ensure the actions at higher efficiency which include the conveying of nickel oxide ore (the material) and the discharging of a nickel/cobalt mixture sulfide (the product).

It is furthermore desired that the processing facilities of multiple series in the wet smelting plant 20 are substantially equal in the capability of processing under favorable conditions in spite of many variations of the requirement to be considered including the period of years for continuing the excavation of nickel oxide ore, the capability of supplying water which is essential for the operation, and the size of area for siting the plant. This allows the wet smelting plant 20 to control with much ease the action of the feed facilities in each series and the action of the step operating facilities of each series when a serious trouble has occurred. Also, since the manuals for operation and controlling are prepared substantially equal in the content between different series of the processing facilities, the cost required for educating the operators can be decreased. Moreover, since the processing facilities of different series are equal in the capability of processing, any misconduct or human error deriving from misreading the capability of processing from one processing facility to another throughout the different series can be minimized and the assignment of the operators to actual tasks in working cycle can have a generous margin.

As described above, in the wet smelting plant 20 of which the feed facilities are connected by the connecting installations, even if a serious trouble occurs in at least one of the feed facilities joined to the processing facility of one series, the desired supply is fed via the connecting installation to the step operating facilities of the other series, whereby the inactive state of the leaching unit 2 will be avoided. Accordingly, the wet smelting plant 20 ensures the continuous operation without interrupting the action of the leaching units 2 unless serious troubles occur simultaneously in the like feed facilities of different series, hence minimizing the reduction in the quantity of processing at the leaching units.

### <2. Method of operating the wet smelting plant when a serious trouble occurs>

An exemplary method of operating the wet smelting plant 20 when a serious trouble occurs will now be described. In the following description, the arrangement of the wet smelting plant 20 shown in Figs. 1 and 2 is referred simply for convenience.

It is assumed that a serious trouble such as the above described one (which causes the cancellation of the operation of any of the processing facilities) occurs in, for example, either the utility feed facility 8a or the utility feed facility 8b in the wet smelting plant and interrupts the action of the feed facility for feeding an amount of stream. For compensation, the operational capability of the other utility feed facility in the wet smelting plant 20 is raised from its normal level.

For instance, when the supply of steam from the utility feed facility 8a in the wet smelting plant 20 is interrupted by the serious trouble, the utility feed facility 8b falls in a one-side operation mode and raises its operational capability (an operational load) from the normal level. It is preferable in the wet smelting plant 20 that the raise of the operational capability of the utility feed facility 8b at the one-side operation mode is equal to 120 % of the normal level. Since the utility feed facility 8b in the wet smelting plant 20 is raised to 120 % from the normal level in the operational capability, it can stably supply each step operating facility with a desired amount of steam while being not overloaded.

It is also determined in the wet smelting plant 20 that a total of the operating capability of the processing facility of each series is set to 120 % while the lowest of the operational capability of each of the leaching units 2 is at least 50 %. This allows each leaching unit 2 in the wet smelting plant 20 to be operated with at least 50 % of the normal level. Accordingly, in the wet smelting plant 20, the introduction of the preparation time which gives a significant drawback in the actual operation, described previously, will be avoided without interrupting the action of the leaching unit 2, while the action being certainly discontinued in the conventional plant.

The expression that the total of the operational capability of the processing facility of each series is 120 % means that, when the operational capability of the processing facility of each series is 100 % at the normal operation, the operation is carried out at 120 % of the total operational capability. At an instance of that case, the wet smelting plant 20 conducts the operation with 60 % of the normal operational capability of each of the I series and II series processing facilities. It is alternatively capable that the I series processing facility runs at 50 % of the normal level while the II series processing facility runs at 70 % of the normal level or that the I series processing facility runs at 70 % of the normal level while the II series processing facility runs at 50 % of the normal level.

Moreover, in the wet smelting plant 20, while the supply of water, electric power, hydrogen sulfide, flocculant, or neutralizer, other than the supply of steam described above, is requested, the leaching unit 2 can be prevented from having the preparation time as equal to at the operation with the supply of steam.

As described above, the wet smelting plant 20 of this embodiment can continue to run the operation without canceling the action of the leaching units 2 since the leaching units 2 are protected from running down unless the like feed facilities of both series meet serious troubles at one time. Accordingly, the reduction in the quantity of processing at the leaching step will be minimized in the wet smelting plant 20 of this embodiment. It would be understood that the probability of having such serious troubles at one time in the like feed facilities of the multiple series in the wet smelting plant 20 is quite low and the processing facilities can practically be avoided from running down upon the occurrence of serious troubles.

### (3. Other Embodiments)

While the foregoing description is made on the wet smelting plant 20 having two series of the processing facilities, the present invention is applicable to another wet smelting plant having three or more series of the processing facilities. In the processing facilities in the wet smelting plant having three series of the processing facilities, for example, when one series of the processing facility is active, about 1/3 of the operation can be continued with the operational capability shifted down to 33 % or when two series of the processing facilities are active, the operation can be continued with the operational capability shifted down to 66 %. As described, with the number of series for the processing facilities being increased, the load imposed excessively on each step operating facility in the active series for increasing the productivity can be declined.

The above described wet smelting plant for nickel oxide ore may further include an emergency storage vessel (for example, a storage tank for accomplishing an 8-hours period of the utility service). This permits a more intricate action of adjustment. For example, in case that the utility feed facility 8a in the above described wet smelting plant 20 encounters a serious trouble, the operation can be made with the utility service supported by the supply from the emergency storage vessel while the operational capability of the utility feed facility 8b remaining at the normal level (100 %) instead of raising to 140 %.

It is also capable that, when the utility feed facility 8b is turned to its one-side operation mode in the wet smelting plant 20 but its operational capability remains at its normal level (100 %), the total of the operational capability of the processing facilities of the series stays at 100 % with at least the lowest of the operational capability of the leaching unit 2 being set to 50 %. For example, with the total of the operational capability of the processing facilities being set to 100%, 50 % for each processing facility, the utility supply stored in the emergency storage vessel can be used for accomplishing the utility service.

Moreover, the highest of the operational capability of each feed facility in the wet smelting plant 20 can be set to higher than 120 %, for example, 140 % if permitted. For example, when the utility feed facility 8a encounters a serious trouble and the operational capability of the utility feed facility 8b is raised to 140 %, the total of the operational capability of the processing facility of each series can be 140 % with the lowest of the operational capability of the leaching units 2 being 50 %.

The wet smelting plant 20 according to the present invention may further include a detector for detecting the occurrence of a serious trouble in each of the above described feed facilities, and a controller for, when the detector detects the occurrence of a serious trouble, adjusting the operational capability of the feed facility and controlling the action of the opening and closing mechanism. More specifically, the detector is connected to the feed facilities in the wet smelting plant. Also, the controller is connected to the detector, the feed facilities, and the opening and closing mechanisms of the connecting installations.

In the operation of the wet smelting plant, the detector examines whether or not the supply of, for example, steam is canceled due to the occurrence of a serious trouble in the utility feed facility 8a. When the detector detects the cancellation of the supply of stream from the feed facility, it transmits its detection signal to the controller. Upon receiving the detection signal from the detector, the controller controls and raises the operational capability of the utility feed facility 8b turned to the one-side operation mode to 120 % of the normal level. Simultaneously, the controller controls the action of the step operating facilities in both the I series and II series so that the operational capability of the processing facility of each series is lowered to 60 % of the normal level and determines the action of the opening and closing mechanism of the connecting installation. Accordingly, even when at least one feed facility in the processing facility of one series encounters a serious trouble, the cancellation of the entire action of the processing facility can be avoided and the reduction of its processing quantity can be minimized.

### <4. Examples>

### Examples

Examples of the embodiments of the present invention will be described. It would be understood that the present invention is not limited to any of the examples.

### (Example 1)

### <Operational Conditions>

Example 1 was conducted a seven-month period of the operation with the wet smelting plant 20 of the present invention shown in Figs. 1 and 2.

The wet smelting plant 20 employed for conducting Example 1 was composed of two series of the processing facilities including the pre-processing units 1, the leaching units 2, the solid/liquid separation units 3, the neutralization units 4, the dezincification units 5, the sulfurization units 6, and the purifying units 7. The wet smelting plant 20 of the present invention also further comprised the utility feed facilities 8, the hydrogen sulfide feed facilities 10, the neutralizer feed facilities 12, and the flocculant feed facilities 14. In addition, the wet smelting plant 20 included the utility connecting installation 16, the hydrogen sulfide connecting installation 17, the neutralizer connecting installation 18, and the flocculant connecting installation 19 which are disposed at the uppermost of the supply paths of the feed facilities for connecting between the like feed facilities of the two series.

In Example 1, the feed facilities in the wet smelting plant 20 was arranged so that, when such a serious trouble as described previously occurs in one of the like feed facilities, the operational capability of the other feed facility having no serious trouble was raised to 120 % with the total of the operational capability of the processing facilities being 120 % and the lowest of the same being not lower than 50 %.

### <Result of Operation>

For the utility service, the utility feed facilities 8 encountered the serious trouble four times in total. At the result, the inactive period of the leaching units 2 was nil. For the hydrogen sulfide supply, the hydrogen sulfide feed facilities 10 encountered the trouble thirty four times. At the result, the inactive period of the leaching units 2 was nil. For the neutralizer supply, the neutralizer feed facilities 12 encountered the trouble one time. At the result, the inactive period of the leaching units 2 was nil. For the flocculant supply, the flocculant feed facilities 14 encountered no trouble. It is noted that in any case of the trouble, the processing facilities were not in trouble at the same time in both the I series and the II series.

### (Comparison 1)

### <Operational Conditions>

Comparative Example 1 was conducted a seven-month period of the operation with the use of the wet smelting plant shown in Figs. 4 and 5, not the wet smelting plant of the present invention. More specifically, the utility feed facilities 8, the hydrogen sulfide feed facilities 10, the neutralizer feed facilities 12, and the flocculant feed facilities 14 in Comparative Example 1, unlike the arrangement of Example 1, were operated while not connected at the uppermost of the supply paths by the connecting installations between the corresponding pairs for carrying out the delivery of supplies for mutual substitution.

### <Result of Operation>

For the utility supply (steam, water, electric power), the utility feed facilities 8 encountered the trouble three times in total. At the result, the inactive period of the leaching units 2 extended 235 hours. For the hydrogen sulfide supply, the hydrogen sulfide feed facilities 10 encountered the trouble thirty times. At the result, the inactive period of the leaching units 2 extended 98 hours. For the neutralizer supply, the neutralizer feed facilities 12 encountered the trouble one time. At the result, the inactive period of the leaching units 2 extended 4 hours. For the flocculant supply, the flocculant feed facilities 14 encountered no trouble. It is noted that in any case of the trouble, the processing facilities were not in trouble at the same time in both the I series and the II series.

As apparent from the results of the operation of Example 1, each pair of the feed facilities of the series in the wet smelting plant 20 were connected to each other by the connecting installation and, when one of the feed facilities pair encountered a serious trouble, the other feed facility in the opposite series was enabled to conduct the supply service. It was hence found that the overall operation continued without interrupting the action of the leaching units 2 and the reduction in the quantity of processing at the leaching step was minimized.

On the contrary, the feed facilities of the series in the wet smelting plant of Comparative Example 1 unlike those of Example 1 were not connected by the connecting installations and, when one of the feed facilities had a serious trouble, the operation failed to continue without interrupting the action of the leaching units 2. The inactive period of the leaching units 2 was as much as 237 hours in total.

The present invention is not limited to the wet smelting plant for nickel oxide ore but applicable to any plant for treating a slurry containing hard particles or handling generated precipitates which are highly adhesive to the surfaces of the facilities and its industrial advantage will be high.

## Claims

1. A wet smelting plant for nickel oxide ore, the plant comprising;
two or more series of processing facilities, wherein each processing facility including:
a step operating facility having a pre-process unit, a leaching unit, a solid/liquid separation unit, a neutralization unit, a dezincification unit, a sulfurization unit and a purifying unit;
a utility feed facility for feeding the pre-process unit, the leaching unit, the solid/liquid separation unit, the neutralization unit, the dezincification unit, the sulfurization unit and the purifying unit with the utility supplies including steam, water, and electric power;
a hydrogen sulfide feed facility for feeding the dezincification unit and the sulfurization unit with hydrogen sulfide;
a flocculant feed facility for feeding the solid/liquid separation unit and the neutralization unit with a flocculant; and
a neutralizer feed facility for feeding the neutralization unit and the purifying unit with a neutralizer; and
connecting installations for providing connections between the utility feed facilities, between the hydrogen sulfide feed facilities, between the flocculant feed facilities and between the neutralizer feed facilities in order to make the delivery of the utility supplies, the hydrogen sulfide, the flocculant and the neutralizer for mutual substitution.

2. The wet smelting plant of claim 1, wherein the connecting installations are arranged for connecting between the feed facilities at the uppermost of supply paths along which the utility , the hydrogen sulfide, the flocculant and the neutralizer are fed from the feed facilities.

3. The wet smelting plant of claim 1 or 2, wherein the processing facilities of the two or more series are equal in the processing capability.

4. The wet smelting plant of any of claims 1 to 3, wherein the number of the two or more series is two.

5. The wet smelting plant of any of claims 1 to 4, wherein the connecting installation includes an opening and closing mechanism.

6. A method of operating a wet smelting plant, the plant of any of claims 1 to 5 is employed.

7. The method of operating a wet smelting plant of claim 6, wherein when the action of at least one of the feed facilities in one of the series including the utility feed facility, the hydrogen sulfide feed facility, the flocculant feed facility and the neutralizer feed facility is discontinued, the feed facilities in the other series are operated at a level higher than the normal operational efficiency and the processing facilities of the series are lowered in the operational efficiency.
